# EUROPEAN PATENT SPECIFICATION

(11) **EP 3 472 807 B1**
(45) Date of publication and mention of the grant of the patent: **23.09.2020**
(21) Application number: 16905682.7
(22) Date of filing: 21.12.2016
(51) Int. Cl.: G06T 11/60

(54) **AUTOMATICALLY IDENTIFYING AND DISPLAYING OBJECT OF INTEREST IN A GRAPHIC NOVEL**
AUTOMATISCHE IDENTIFIZIERUNG UND ANZEIGE EINES OBJEKTS VON INTERESSE IN EINEM BILDROMAN
IDENTIFICATION ET AFFICHAGE AUTOMATIQUES D'UN OBJET D'INTÉRÊT DANS UN NOUVEAU GRAPHIQUE

(30) Priority: 17.06.2016 US 201615186208
(43) Date of publication of application: 24.04.2019
(73) Proprietor: Google LLC, Mountain View, CA 94043 (US)
(72) Inventor: HARTRELL, Greg, Mountain View, CA 94043 (US); CONBOY, Garth, Mountain View, CA 94043 (US); DUGA, Brady, Mountain View, CA 94043 (US); GU, Xinxing, Mountain View, CA 94043 (US); BEAVERS, Adeline, Mountain View, CA 94043 (US); GHOSH, Debajit, Mountain View, CA 94043 (US); RIVLIN, John, Mountain View, CA 94043 (US); NEWBERGER, Alan, Mountain View, CA 94043 (US); AN, Tae Wan, Mountain View, CA 94043 (US); MOON, Jacob, Mountain View, CA 94043 (US); SALVARANI, Christopher, Mountain View, CA 94043 (US); BLASS, Karl, Mountain View, CA 94043 (US)
(74) Representative: Derry, Paul Stefan
(86) International application number: PCT/US2016/068117
(87) International publication number: WO 2017/218043

(56) References cited:
- WO-A1-2014/042051
- JP-A- 2007 164 550
- JP-A- 2007 226 255
- US-A1- 2008 301 578
- US-A1- 2012 196 260
- US-A1- 2013 282 376
- US-A1- 2013 283 157
- US-A1- 2014 258 911
- WANG YONGTAO ET AL: "An R-CNN Based Method to Localize Speech Balloons in Comics", 3 January 2016 (2016-01-03), INTERNATIONAL CONFERENCE ON SIMULATION, MODELING, AND PROGRAMMING FOR AUTONOMOUS ROBOTS,SIMPAR 2010; [LECTURE NOTES IN COMPUTER SCIENCE; LECT.NOTES COMPUTER], SPRINGER, BERLIN, HEIDELBERG, PAGE(S) 444 - 453, XP047343390, ISBN: 978-3-642-17318-9 [retrieved on 2016-01-03] * the whole document *

## Description

### BACKGROUND

### 1. TECHNICAL FIELD

The subject matter described herein generally relates to digital graphic novels and in particular to providing navigation of objects of interest in digital graphic novel content.

### 2. BACKGROUND INFORMATION

Electronic books ("ebooks") come in a variety of formats, such as the International Digital Publishing Forum's electronic publication (EPUB) standard and the Portable Document Format (PDF). Ebooks can be read using a variety of devices, such as dedicated reading devices, general-purpose mobile devices, tablet computers, laptop computers, and desktop computers. Each device includes reading software (an "ereader") that displays an ebook to a user. Graphic novels are a form of visual storytelling traditionally delivered through print media. However, publishers are increasingly providing this content for digital consumption using ereaders, especially on phones and tablets. The navigation tools provided by typical ereaders were largely developed with text-based ebooks in mind. Consequently, these ereaders may not provide a satisfactory user experience when used to read digital graphic novels.

Due to the constraints on the screen size and resolution of portable ereaders, a user often has an unsatisfactory experience of navigating a graphic novel if the novel is presented in a conventional manner for the user. For example, the user of the ereader may be required to flip through individual pages of a graphic novel displayed on a relatively small screen of the ereader. In such a case, it is difficult and time-consuming for the user to read the text in speech bubbles or examine other objects of interest in more detail without having to zoom-in and zoom-out on the objects of interest repeatedly. WO2014/042051 relates to a content creation device.
US2012/196260 relates to electronic comic metadata processing.
US2013/282376 relates to a viewer device for a digital comic.

### SUMMARY

The above and other problems are addressed by a method, an electronic device, and a non-transitory computer-readable storage medium. According to an embodiment, a method is provided according to claim 1. In one embodiment, the method includes receiving digital graphic novel content and identifying locations of a plurality of interest regions of the digital graphic novel content by applying a machine-learned model to the digital graphic novel content. The method also includes identifying locations and presentation orders of a plurality of objects of interest in the digital graphic novel content based on the identified locations of the plurality of interest regions, and creating a packaged digital graphic novel including the digital graphic novel content and presentation metadata. The presentation metadata indicates the identified locations and presentation orders of the plurality of objects of interest. The method further includes providing the packaged digital graphic novel to the reading device for presentation of the expanded versions of the plurality of objects of interest in accordance with the presentation metadata.

In one embodiment, the electronic device includes a non-transitory computer-readable storage medium storing executable computer program code and one or more processors for executing the code. The executable computer program code includes instructions for receiving digital graphic novel content and identifying locations of a plurality of interest regions of the digital graphic novel content by applying a machine-learned model to the digital graphic novel content. The instructions also include identifying locations and presentation orders of a plurality of objects of interest in the digital graphic novel content based on the identified locations of the plurality of interest regions, and creating a packaged digital graphic novel including the digital graphic novel content and presentation metadata. The presentation metadata indicates the identified locations and presentation orders of the plurality of objects of interest. The instructions further include providing the packaged digital graphic novel to the reading device for presentation of the expanded versions of the plurality of objects of interest in accordance with the presentation metadata.

In one embodiment, the non-transitory computer-readable storage medium stores executable computer program code including instructions for receiving digital graphic novel content and identifying locations of a plurality of interest regions of the digital graphic novel content by applying a machine-learned model to the digital graphic novel content. The instructions also include identifying locations and presentation orders of a plurality of objects of interest in the digital graphic novel content based on the identified locations of the plurality of interest regions, and creating a packaged digital graphic novel including the digital graphic novel content and presentation metadata. The presentation metadata indicates the identified locations and presentation orders of the plurality of objects of interest. The instructions further include providing the packaged digital graphic novel to the reading device for presentation of the expanded versions of the plurality of objects of interest in accordance with the presentation metadata.

### BRIEF DESCRIPTION OF THE DRAWINGS

FIG. 1 illustrates one embodiment of a networked computing environment suitable for providing navigation of objects of interest in digital graphic novel content.
FIG. 2 is a high-level block diagram illustrating an example of a computer for use in the networked computing environment of FIG. 1, according to one embodiment.
FIG. 3 is a high-level block diagram illustrating one embodiment of the graphic novel corpus shown in FIG. 1.
FIG. 4 is a high-level block diagram illustrating one embodiment of the graphic novel analysis system shown in FIG. 1.
FIG. 5 is a high-level block diagram illustrating one embodiment of the graphic novel distribution system shown in FIG. 1.
FIG. 6 is a high-level block diagram illustrating one embodiment of a reader device shown in FIG. 1.
FIG. 7 shows an example image of a graphic novel with identified locations of speech bubbles, according to one embodiment.
FIG. 8 shows an example image based on the example image of FIG. 7 with an expanded speech bubble, according to one embodiment.
FIG. 9 is a flowchart illustrating a method of providing navigation of objects of interest in digital graphic novel content, according to one embodiment.
FIG. 10 is a flowchart illustrating a method of building a machine-learned model for use in the method of FIG. 9, according to one embodiment.

### DETAILED DESCRIPTION

Publishers are making an increasing volume of graphic novel content available digitally. There is also a vast print corpus of graphic novels, comic books, and comic strips dating back to the 19^{th} Century. Some historians have even argued that artworks produced by ancient civilizations such as Trajan's Column in Rome and the Bayeux Tapestry are essentially the same art form. For convenience, the term graphic novel is used herein to refer to any such content that comprises a series of ordered images with a narrative flow.

Reading graphic novels is different from reading text-based books. Rather than telling a story primarily through text read in a locale specific reading order (e.g., from left-to-right and top-to-bottom in English-speaking countries), the narrative of a graphic novel is conveyed through a combination of ordered panels and text within the panels. The text is contained in speech bubbles and/or written directly on the background of the panels. In some cases, speech bubbles overlap multiple panels. Furthermore, in some instances (e.g., many Japanese graphic novels), the text is read from right-to-left. Consequently, displaying graphic novels effectively on electronic devices presents specific challenges: screen sizes vary, navigation techniques developed for text-based books do not reflect how users read graphic novels, the order in which panels and speech bubbles are read may not be left-to-right or top-to-bottom, the context of a given image relative to other images may be important, etc.

### SYSTEM OVERVIEW

The Figures (FIGS.) and the following description describe certain embodiments by way of illustration only. One skilled in the art will readily recognize from the following description that alternative embodiments of the structures and methods illustrated herein may be employed without departing from the principles described herein. Reference will now be made to several embodiments, examples of which are illustrated in the accompanying figures. It is noted that wherever practicable similar or like reference numbers may be used in the figures and may indicate similar or like functionality.

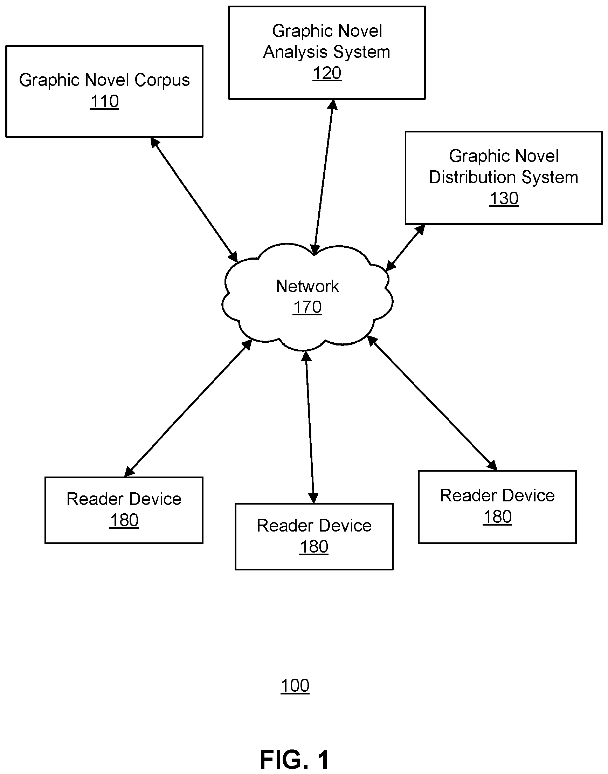

FIG. 1 illustrates one embodiment of a networked computing environment 100 suitable for providing navigation of objects of interest in digital graphic novel content. As shown, the environment 100 includes a graphic novel corpus 110, a graphic novel analysis system 120, a graphic novel distribution system 130, and reader devices 180, all connected via a network 170. Other embodiments of the networked computing environment 100 include different or additional components. In addition, the functions may be distributed among the components in a different manner than described herein.

The network 170 enables the components of the networked computing environment 100 to communicate with each other. In one embodiment, the network 170 uses standard communications technologies and/or protocols and can include the Internet. Thus, the network 170 can include links using technologies such as Ethernet, 802.11, worldwide interoperability for microwave access (WiMAX), 2G/3G/4G mobile communications protocols, digital subscriber line (DSL), asynchronous transfer mode (ATM), InfiniBand, PCI Express Advanced Switching, etc. Similarly, the networking protocols used on the network 170 can include multiprotocol label switching (MPLS), transmission control protocol/Internet protocol (TCP/IP), User Datagram Protocol (UDP), hypertext transport protocol (HTTP), simple mail transfer protocol (SMTP), file transfer protocol (FTP), etc. The data exchanged over the network 110 can be represented using technologies and/or formats including image data in binary form (e.g. Portable Network Graphics (PNG)), hypertext markup language (HTML), extensible markup language (XML), etc. In addition, all or some of the links can be encrypted using conventional encryption technologies such as secure sockets layer (SSL), transport layer security (TLS), virtual private networks (VPNs), Internet Protocol security (IPsec), etc. In another embodiment, the entities on the network 170 can use custom and/or dedicated data communications technologies instead of, or in addition to, the ones described above.

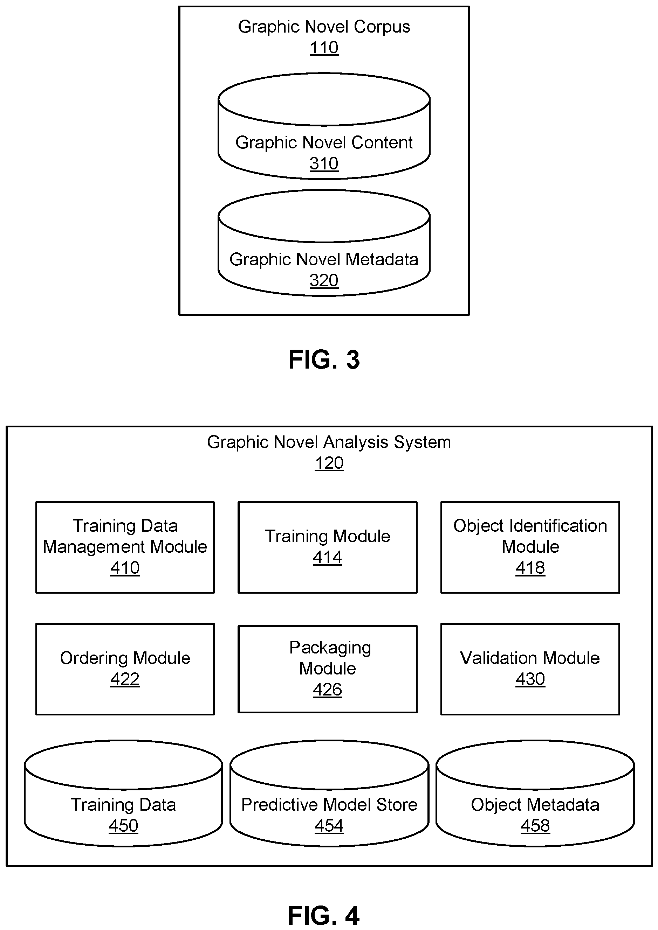

The graphic novel corpus 110 stores digital representations of graphic novels. Typically, a digital graphic novel is represented by a sequential series of digital images, in which each image contains a page or a spread of two adjacent pages of the graphic novel. The narrative of the graphic novel is conveyed through a series of ordered panels on the pages, each containing a graphical depiction of a scene in the narrative that includes portrayal of characters, landscape scenery, moods, and the like. A panel also often contains textual content for conveying the narrative, including speech bubbles that may be balloon-shaped objects containing text to be understood as representing speech or thoughts of one or more characters in the graphic novel. The graphic novel corpus 110 is described in detail below, with reference to FIG 3.

The graphic novel analysis system 120 receives graphic novels and identifies the locations and presentation order of objects of interest in the graphic novels. The location of an object (or any other feature in the image) is defined herein as the coordinates of the points on the outer boundary of the object with respect to the image of the graphic novel containing the object. Thus, the location of an object encompasses both the geographic location of the object with respect to the image containing the object, and also the shape of the object characterized by its outer boundary. Expanded versions of the objects of interest are later presented to the reader devices 180 based on the locations and presentation orders determined by the graphic novel analysis system 120. The objects of interest are objects that play a significant role in conveying the narrative of the graphic novel to a reader of the graphic novel. In one particular example referred throughout the remainder of the specification, the objects of interest are speech bubbles. It is appreciated, however, that other examples of objects of interest alternatively and/or additionally include depicted characters, background text (e.g., text portraying sound effects, description of scenery, etc.), depicted articles (e.g., doors, weapons, etc.), and the like. In one embodiment, the location of an object of interest is determined by identifying interest regions containing distinctive characteristics of the object of interest, and applying various heuristics around the identified interest regions to determine the location of the object of interest.

The graphic novel analysis system 120 generates packaged digital graphic novels that include the content of graphic novels and corresponding presentation metadata indicating how the content of graphic novels should be presented on reader devices 180. In one embodiment, the presentation metadata includes the locations and presentation orders of the objects of interest of a graphic novel such that the reader device 180 can sequentially present individual images of the graphic novel on the screen, and for a given image, sequentially display expanded versions of identified objects of interest according to the determined presentation order in the presentation metadata. For example, the reader device 180 may transition into and out of zooms for a series of sequentially ordered speech bubbles. The graphic novel analysis system 120 provides the packaged digital graphic novels to the graphic novel distribution system 130 for distribution to one or more reader devices 180. The graphic novel analysis system 120 is described in detail below, with reference to FIG 4.

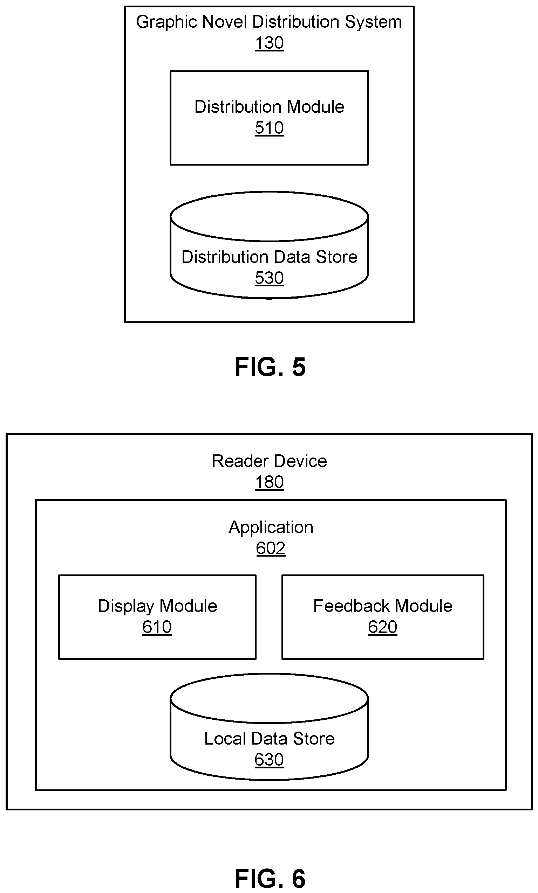

The graphic novel distribution system 130 stores packaged graphic novels received from the graphic novel analysis system 120 and distributes packaged graphic novels to reader devices 180 responsive to receiving requests for graphic novels. The graphic novel distribution system 130 is described in detail below, with reference to FIG 5.

The reader devices 180 are computing devices capable of presenting digital graphic novels to users, such as desktop PCs, laptops, smartphones, tablets, dedicated reading devices, and the like. Although only three reader devices 180 are shown, in practice there are many (e.g., millions of) reader devices 180 that can communicate with the other components of the environment 100 using the network 170. A reader device 180 presents a digital graphic novel to the user through an electronic screen of the reader device 180. The electronic screen of a reader device 180 inherently has a screen size determined by the hardware configuration of the device, and a screen resolution indicating the maximum number of pixels or display units of the electronic screen.

The reader devices 180 receive packaged graphic novels from the graphic novel distribution system 130 and present the graphic novels to users of the reader devices 180 in accordance with the corresponding presentation metadata. Specifically, for a given image of a graphic novel, a reader device 180 is able to present the image and also sequentially present expanded versions of the objects of interest based on the presentation metadata. For example, a page of a graphic novel may be presented on the reader device 180, and responsive to a user input signal, the next speech bubble identified by the presentation metadata may be displayed to the user of the device 180. An exemplary reader device 180 is described in detail below, with reference to FIG. 6.

The environment 100 shown in FIG. 1 allows expanded versions of objects of interest to be sequentially displayed in graphic novels such that users of reader devices 180 may navigate graphic novels in a more convenient manner. Specifically, it allows a user of a reader device 180 to fully navigate a graphic novel without the need to manually zoom-in and zoom-out on an image of the graphic novel to examine objects of interest that are significant in conveying the narrative of the graphic novel.

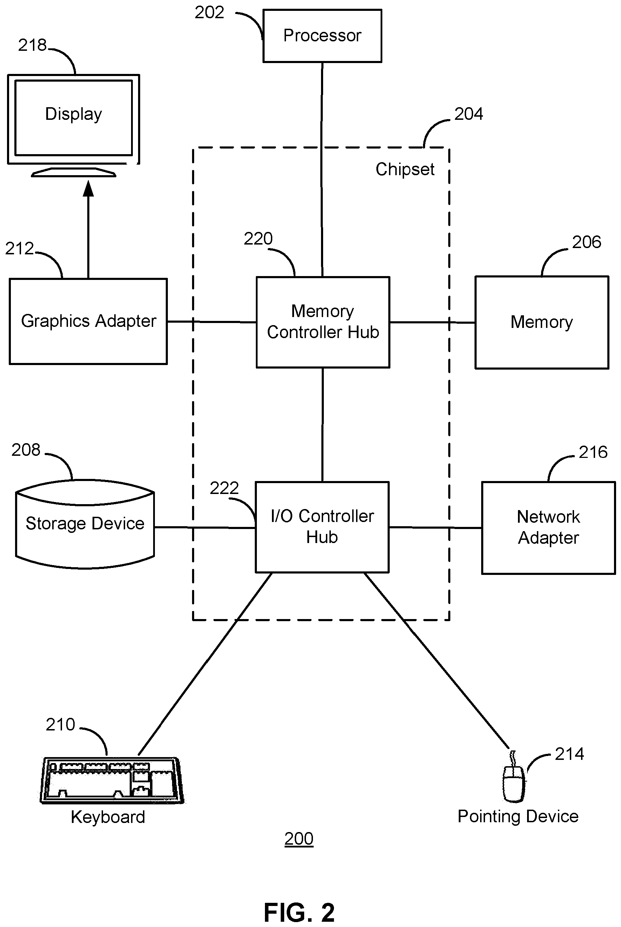

FIG. 2 is a high-level block diagram illustrating one embodiment of a computer 200 suitable for use in the networked computing environment 100. Illustrated are at least one processor 202 coupled to a chipset 204. The chipset 204 includes a memory controller hub 250 and an input/output (I/O) controller hub 255. A memory 206 and a graphics adapter 213 are coupled to the memory controller hub 250, and a display device 218 is coupled to the graphics adapter 213. A storage device 208, keyboard 210, pointing device 214, and network adapter 216 are coupled to the I/O controller hub 255. Other embodiments of the computer 200 have different architectures. For example, the memory 206 is directly coupled to the processor 202 in some embodiments.

The storage device 208 includes one or more non-transitory computer-readable storage media such as a hard drive, compact disk read-only memory (CD-ROM), DVD, or a solid-state memory device. The memory 206 holds instructions and data used by the processor 202. The pointing device 214 is used in combination with the keyboard 210 to input data into the computer system 200. The graphics adapter 213 displays images and other information on the display device 218. In some embodiments, the display device 218 includes a touch screen capability for receiving user input and selections. The network adapter 216 couples the computer system 200 to the network 110. Some embodiments of the computer 200 have different or additional components than those shown in FIG. 2. For example, the graphic novel analysis system 120 can be formed of multiple computers 200 operating together to provide the functions described herein. As another example, the client device 180 can be a smartphone and include a touch-screen that provides on-screen keyboard 210 and pointing device 214 functionality.

The computer 200 is adapted to execute computer program modules for providing functionality described herein. As used herein, the term "module" refers to computer program instructions or other logic used to provide the specified functionality. Thus, a module can be implemented in hardware, firmware, or software, or a combination thereof. In one embodiment, program modules formed of executable computer program instructions are stored on the storage device 208, loaded into the memory 206, and executed by the processor 202.

### EXEMPLARY SYSTEMS

FIG. 3 illustrates one embodiment of the graphic novel corpus 110. As shown, the graphic novel corpus 110 includes graphic novel content 310 and graphic novel metadata 320. Other embodiments of the graphic novel corpus 110 include different or additional components. For example, although graphic novel content 310 and graphic novel metadata 320 are shown as distinct entities, a single data store may be used for both the content and metadata.

The graphic novel content 310 includes digital images of the pages of graphic novels in the corpus 110, and is stored on one or more non-transitory computer-readable storage media. As discussed previously, the narrative of a graphic novel is conveyed through a series of ordered panels on pages of the graphic novel, each containing a graphical depiction of a scene in the narrative. In various embodiments, the digital images are provided pre-made by publishers and authors, created by scanning existing printed graphic novels, or compiled using a combination of these techniques. The digital images in graphic novel content 310 have inherent resolutions determined by the sources of the digital images. For example, the resolution of a scanned image may be limited by the optical resolution of the scanner, or the resolution of an image provided by a publisher may be limited to that available to the publisher. The resolution may be measured by various units, including number of pixels across the height and width of the image, pixels per inch (PPI), or the like.

The digital images in graphic novel content 310 can be stored in any appropriate format, such as EPUB or PDF. For example, the graphic novel content 310 may include PDF documents of a complete graphic novel, with each page of the PDF including an image of a page of the graphic novel. Alternatively, each page of the PDF may include an image of a two-page spread of the graphic novel. As another example, the graphic novel content 310 may include fixed layout EPUB files of the graphic novel. One of skill in the art will appreciate other formats in which graphic novel content 310 can be stored.

The graphic novel metadata 320 includes known metadata about graphic novels in the corpus 110, and contains information such as the title, publication date, author, publisher, series, main characters and their history in other graphic novels, and the like of the graphic novels in the corpus 110. The graphic novel metadata 320 may be provided by publishers or authors of the graphic novels, and/or by an individual or entity that scans printed graphic novels (e.g., by typing it into an electronic form as part of the scanning process). Some graphic novels in the corpus 110 may have their digital images stored in graphic novel content 310, but may lack some or all associated graphic novel metadata.

The graphic novel metadata 320 additionally contains panel information on graphic novels in the corpus 110. The panel information indicates the location and intended reading order of panels in the digital images of a graphic novel, and may be determined by applying a machine-learned model to the content of the graphic novel, or may be manually determined by a human operator. As an example, the panel information may contain, for each identified panel in a graphic novel, the row and column coordinates of all the pixels on the boundary of a panel indicating the location of the panel, and the intended reading order of the panel. The panel information also indicates whether a panel spans across a spread of two adjacent pages in a graphic novel. In one embodiment, a machine-learned model determines such a panel by analyzing whether the outer boundary of the panel spans across two adjacent pages.

FIG. 4 illustrates one embodiment of the graphic novel analysis system 120. As shown, the graphic novel analysis system 120 includes a training data management module 410, a training module 414, an object identification module 418, an ordering module 422, a packaging module 426, a validation module 430, a training data store 450, a predictive model store 454, and object metadata 458. Other embodiments of the graphic novel analysis system 120 include different or additional components. In addition, the functions may be distributed among the components in a different manner than described herein. For example, the graphic novel analysis system 120 might not include a predictive model store 454, instead storing predictive models in the graphic novel corpus 110.

The training data management module 410 manages training data stored in the training data store 450. The training data store 450 includes a set of digital images from graphic novels or other sources of images that are each tagged with metadata indicating interest regions associated with objects of interest. Specifically, interest regions identify areas representative of objects of interest, and an interest region may be included within the associated object, may encompass the object, or may overlap with the object. Thus, the location of an interest region approximates the location of the corresponding object of interest. In various embodiments, the interest regions are rectangular text regions encompassing text that are representative of speech bubbles in graphic novels. In other embodiments, the interest regions are regions encompassing main characters or other significant objects of interest in graphic novels. In one embodiment, the training data management module 410 generates the training data store 450 by selecting a set of graphic novels in the graphic novel corpus 110 and tagging the interest regions in the selected novels. The training data management module 410 may also tag interest regions (e.g., text regions) in sources of images other than graphic novels (e.g., any image containing text such as street numbers, signs, etc.). In another embodiment, the training data management module 410 crowd-sources the construction process to participating users by allowing the participating users to select graphic novels from the corpus 110 and tag the interest regions in the selected novels.

The training module 414 builds a machine-learned model from the tagged digital images in the training data store 450. The machine-learned model is capable of receiving a un-tagged image and identifying the locations of interest regions in the image that approximate locations of objects of interest in the image. For example, the machine-learned model may receive a un-tagged digital page of a graphic novel containing one or more speech bubbles, and output the locations of rectangular regions surrounding the texts within each speech bubble. As another example, the machine-learned model may receive a un-tagged image of a graphic novel containing one or more depictions of the main character of the novel, and output the locations of rectangular regions encompassing the various depictions of the character. The location of an interest region may be represented by coordinates of pixels on the boundary of the identified region.

To build the machine-learned model, the training module 414 extracts the interest regions from the tagged images in the training data store 450 and learns distinctive characteristics of the objects of interest embedded in the tagged regions. When applied to an un-tagged digital image of a graphic novel, the machine-learned model is able to identify and pinpoint the locations of interest regions in the un-tagged image that contain the learned characteristics of the objects of interest. In one embodiment, the machine-learned model is a feed-forward neural network (NN) in the form of a single-layer or multi-layer perceptron, an artificial neural network (ANN), a deep neural network (DNN), a convolution neural network (CNN), or the like that takes in as input a numerical map representing an image of a graphic novel. In such an embodiment, the training module 414 determines the number of nodes in each layer of the feed-forward neural network as well as the connections between the nodes in adjacent layers, and feeds the tagged interest regions to the NN such that the optimal weights of each connection can be learned. In one instance, the backpropagation algorithm may be used to determine the set of optimal weights for a NN

The functions performed by the training module 414 are not limited to the graphic novel analysis system 120 and may also be performed by other components. For example, the reader devices 180 may be configured to perform such functions. The training module 414 provides the machine-learned models to the object identification module 418 and also stores them in predictive model store 454.

The object identification module 418 receives graphic novels from the graphic novel corpus 110 and determines the locations of objects of interest (e.g., speech bubbles) in the digital images of the graphic novels based on the identified interest regions (e.g., text regions of the speech bubbles) in the images. The object identification module 418 first determines the locations of interest regions in a graphic novel by applying the machine-learned models in the predictive model store 454 to digital images of the graphic novel. However, it is appreciated that in other embodiments, human-defined rules can also be used to determine the locations of interest regions in the graphic novel. The object identification module 418 then determines the locations of the objects of interest by analyzing distinctions that indicate boundaries of the objects of interest in image portions surrounding the interest regions in the graphic novel. In one embodiment, indications of significant color gradient in image portions surrounding the interest regions are used to determine the boundaries of the objects of interest. It is appreciated, however, that in alternative embodiments other heuristics or algorithms can be used to identify the boundaries of the objects of interest based on the identified interest regions.

In the case of speech bubble objects, the object identification module 418 determines the locations of rectangular text regions within the speech bubbles by applying the machine-learned models constructed by the training module 414 to the digital images of a graphic novel. For each identified text region in a corresponding image, the object identification module 418 analyzes the text region, determines the background color of the text, and determines a set of points surrounding the text region that have significant color contrast with the background color. The boundary defined by the significant color gradient represents the location of the speech bubble object. For example, many speech bubbles include a white background with black text and a black line outlining the boundary of the speech bubble.

In one instance, the set of points with significant color contrast is determined by mapping the background color of the text and the colors of points surrounding the text region to a three-dimensional RGB (red-green-blue) space, and analyzing the points that have the greatest vector distance in the RGB space from the background color. The location of the object of interest is determined based on the coordinates of the identified set of points. In one embodiment, the set of points is further interpolated into a parametric curve (e.g., as a Bezier curve), and the coordinates of the points on the interpolated curve are determined as the location of the speech bubble in the digital image. By describing the location of the speech bubble or any object of interest as a parametric curve instead of a set of individual points, the geometry of the object of interest is transmitted and presented to the reader device 180 more efficiently.

In another embodiment, distinctive features of objects are identified based on the location of the objects. For example, speech bubble objects include balloon-shaped portions that contain text, and tail portions that indicate characters associated with the speech bubbles. The shape of a tail portion of a speech bubble may be characterized by a sharp angle in which the common tip of the sharp angle points towards the character associated with the speech bubble. The object identification module 418 may analyze the geometry of a speech bubble object and identify sharp angles in the geometry that indicate the presence of tail portions of the speech bubble object. The common tip of a speech bubble tail portion is referred to as an "anchor point" throughout the remainder of the application. Similarly, the object identification module 418 may identify round portions in the geometry that indicate balloon-shaped portions of the speech bubble object. In one instance, the object identification module 418 individually determines the locations of distinctive features of the objects of interest (e.g., balloon-shaped portions, tail portions, anchor points of speech bubble objects) along with the locations of the objects of interest themselves.

As another example, a compound speech bubble object is a single speech bubble object associated with a character containing multiple balloon-shaped portions that may be connected with each other via thin segments or the like. The thin segments between each balloon-shaped portion may indicate a discontinuity in the narrative of the character in which the intended reading order of the text in the balloon-shaped portions of the compound speech bubble is interrupted by speech bubble text associated with another character. The object identification module 418 may analyze the geometry of a speech bubble object and identify the balloon-shaped portions and/or thin segments in the geometry that indicate that the speech bubble object is a compound speech bubble object.

Although speech bubble objects were outlined as a representative example, similar processes can be performed for other objects of interest. Moreover, the functions performed by the object identification module 418 are not limited to the graphic novel analysis system 120. For example, the reader devices 180 may be configured to perform such functions. The location information containing the location of the objects of interest for graphic novels in the corpus 110 are stored as object metadata 458.

In one embodiment, the object identification module 418 also stores commentary on the identified objects of interest as object metadata 458. For example, for an identified character in a graphic novel, the commentary may include the name of the character, history on the character in other graphic novels, and the like. The commentary may be presented to the user of the reader device 180 to provide improved narrative context of the identified objects of interest in a graphic novel.

The ordering module 422 retrieves location information for objects of interest from the object metadata store 458 for graphic novels in the corpus 110, and determines presentation orders for the objects. The presentation order governs the sequence in which expanded versions of the objects are presented to users of the reader devices 180. In one embodiment, the presentation order for objects in a graphic novel is determined based on the reference points of the objects of interest relative to panel information included in the graphic novel metadata 320. The reference points are coordinates of distinct points on or within the objects of interest, such as the coordinates of speech bubble anchor points. Specifically, for each object of interest in a graphic novel, the ordering module 422 first identifies and tracks in which panels the object of interest is contained. The presentation orders are determined based on whether the reference points of the objects are included within the location of the panels. A panel may be considered to contain a speech bubble if the coordinates of the anchor point are within the location of the panel.

The ordering module 422 determines the presentation order of the objects of interest in the panels that contain the objects. In one embodiment, the presentation order is the intended reading order for the language associated with the graphic novel. Specifically, within a single panel of a graphic novel in a language typically read top-to-bottom, left-to-right, speech bubbles are ordered top-to-bottom with ties broken left-to-right based on their reference points. In contrast, within a single panel of a graphic novel in a language read typically read top-to-bottom, right-to-left (e.g., Japanese graphic novels), speech bubbles are ordered top-to-bottom with ties broken right-to-left based on their reference points.

In one embodiment, when a speech bubble object is determined to be a compound speech bubble object, the ordering module 422 determines the presentation order of each balloon-shaped portion individually instead of assigning the whole compound bubble object a single presentation order. For example, the ordering module 422 may assign a reference point for each balloon-shaped portion in a compound speech bubble object and assign their presentation order individually based on the spatial relationships of the reference points with other speech bubble objects.

The functions performed by the ordering module 422 are not limited to the graphic novel analysis system 120. For example, the reader devices 180 may be configured to perform such functions. The presentation ordering of the objects of interest for graphic novels in the corpus 110 are stored as part of object metadata 458 along with the location of the objects, and are provided to the packaging module 426.

The packaging module 426 creates a packaged digital graphic novel that includes the corresponding graphic novel content and presentation metadata indicating how the graphic novel should be presented by the reader device 180. In one embodiment, the packaging module 426 creates a packaged digital graphic novel (e.g., a PDF or fixed layout EPUB file, such as one conforming to the EPUB Region-Based Navigation 1.0 standard) that includes a series of ordered images (e.g., one image per page of the graphic novel, one image per two-page spread of the graphic novel) and presentation metadata corresponding to the digital graphic novel. The presentation metadata indicate how the reader device 180 should sequentially present images of the graphic novel (e.g., individual pages presented in full screen). The presentation metadata also includes panel information containing the location and intended reading order of panels in the digital graphic novel, and object metadata containing the location and presentation order of each object of interest in the digital graphic novel based on the information in object metadata 458 and graphic novel metadata 320. The packaging module 426 packages content of graphic novels, along with their presentation metadata, and provides the packaged digital graphic novels to the graphic novel distribution system 130.

In an alternative embodiment, the graphic novel analysis system 120 omits packaging the digital graphic novel content and presentation metadata together, and instead directly provides the digital graphic novel content and corresponding presentation metadata to the reader devices 180 via an application programming interface (API).

The validation module 430 receives feedback data about the packaged digital graphic novels from users of the reader devices 180, verifies the feedback data, and provides the feedback data to the appropriate modules in the graphic novel analysis system 120 so the user navigation experience for packaged digital graphic novels can be improved. The validity of the feedback data may be verified through a human operator.

The feedback data represents comments from users of reader devices 180 about how the presentation of the digital graphic novels can be improved. In one embodiment, the feedback data include indications of incorrect presentation metadata. In one instance, when the feedback data indicates that an object of interest has not been detected, the validation module 430 generates an interest region around the object and provides the tagged image to the appropriate module in the graphic novel analysis system 120. For example, the validation module 430 may provide the tagged image to the object identification module 418 such that the location of the object of interest can be identified based on the tagged interest region and accordingly update the presentation metadata of the corresponding digital graphic novel. The corresponding graphic novel with the updated presentation metadata may be re-ordered through the ordering module 422, re-packaged by the packaging module 426, and provided to the graphic novel distribution system 130. As another example, the tagged image may be provided to the training data management module 410 such that the training data 450 can be updated with the tagged image. Upon updating the training data store 450, the training module 414 may improve the machine-learned model stored in predictive model store 454 by using the images tagged by the user.

In another instance, when the feedback data indicates that the presentation order of objects of interest is incorrect, the validation module 430 may provide this information to the ordering module 422 such that the module 422 may update the presentation order of the objects of interest in the corresponding graphic novel. Similarly to the instance above, the graphic novel with the updated presentation ordering of the objects may be re-packaged by the packaging module 426 and provided to the graphic novel distribution system 130.

The feedback data also includes a collection of graphic novel image portions that have been zoomed-in by users of reader devices 180 indicating potential objects of interest. In one embodiment, the locations of zoomed-in portions are represented by rectangular regions on the image encompassing the portions that were magnified. A zoomed-in portion may contain a type of object that is recognized by the system 120 but was undetected by the system 120, but may also contain a new type of object unrecognized by the graphic novel analysis system 120 that is of interest to users of reader devices 180. For example, the zoomed-in portions may contain a new type of character in a graphic novel that the graphic novel analysis system 120 failed to recognize beforehand. The validation module 430 may examine whether such portions contain new or existing objects of interest and provide this information to the appropriate module in the graphic novel analysis system 120. In one instance, the validation module 430 may send this information to the training data management module 410 such that the corresponding character in graphic novels of the training data store 450 may be tagged appropriately.

FIG. 5 illustrates one embodiment of the graphic novel distribution system 130. As shown, the graphic novel distribution system 130 includes a distribution module 510 and a distribution data store 530. Other embodiments of the graphic novel distribution system 130 include different or additional components. In addition, the functions may be distributed among the components in a different manner than described herein.

The distribution module 510 stores the packaged digital graphic novels received from the graphic novel analysis system 120 in the distribution data store 530, and distributes the packaged novels to users of the reader devices 180 upon receiving requests for the packaged digital graphic novels. The distribution data store 530 includes one or more computer-readable media that store the packaged digital graphic novels. In some embodiments, the distribution data store 530 is located at a server farm that provides functionality for the digital graphic novel distribution system 130.

FIG. 6 illustrates one embodiment of a reader device 180. As shown, the reader device 180 includes an application 602, a display module 610, a feedback module 620, and a local data store 630. Other embodiments of the reader device 180 include different or additional components. In addition, the functions may be distributed among the components in a different manner than described herein.

The application 602 allows the reader device 180 to interact with the graphic novel analysis system 120 and the graphic novel distribution system 130. For example, the application 602 could be a browser that allows a user of the reader device 180 to obtain packaged digital graphic novels by browsing a web site of the graphic novel distribution system 130. As another example, the application 602 could be a dedicated application specifically designed (e.g., by the organization responsible for the graphic novel analysis system 120 and/or the graphic novel distribution system 130) to enable interactions with the graphic novel analysis system 120 and graphic novel distribution system 130. The application 602 stores the received packaged graphic novels in the local data store 630 of the reader device 180 such that it can be accessed locally, or in a remote server (e.g., cloud server) such that it can be accessed via network 170.

The display module 610 generates a user interface for displaying a packaged digital graphic novel selected by the user of the reader device 180, and presents the graphic novel based on the presentation metadata and reader device 180 configurations. Specifically, the display module 610 uses the presentation metadata included in the packaged digital graphic novel to perform a series of presentation actions in response to a series of signals. The series of actions include displaying individual images of the graphic novel and sequentially presenting expanded versions of objects of interest in the images based on the determined presentation order.

In one embodiment, the user of the reader device 180 is allowed to select the options for signaling the display module 610 to perform the subsequent action. For example, the user of the reader device 180 may select to signal the next action manually by pressing on buttons of the reader device 180 (e.g., volume keys on the device), or automatically by instructing the display module 610 to perform the next action after a predetermined amount of time. The predetermined amount of time may vary for each identified object of interest. For example, the display module 610 may present an expanded speech bubble object for an amount of time based on the amount of text determined in the speech bubble object (e.g., indicated by the size of the corresponding text region of the speech bubble). Thus, the signal may be a user input signal or an indication that a predetermined amount of time has passed since the previous action (e.g., 5 seconds since first speech bubble was expanded).

The display module 610 initially presents an image of a graphic novel on the screen of the reader device 180 according to the inherent resolution of the reader device 180. Often times, the inherent resolution of the mobile reader device 180 is lower than the resolutions of digital images of graphic novels. In such an example, the display module 610 may down-sample the image for appropriate presentation on the reader device 180. Responsive to a signal, the display module 610 identifies the location of a first object of interest in the image with the first presentation order (e.g., first speech bubble to be read in the image) and presents an expanded version of the object. Responsive to another signal, the display module 610 removes the expanded version of the first object, identifies a second object of interest within the image having the next order (e.g., second speech bubble to be read in the image), and presents an expanded version of the second object on the image, and so on. The subsequent image of the graphic novel is presented when expanded versions of all objects of interest have been presented in the image. In the instance of a compound speech bubble object, the display module 610 may present expanded versions of each balloon-shaped portion according to their determined presentation order instead of presenting the expanded version of the whole speech bubble object.

In one embodiment, the display module 610 accounts for objects of interest in panels spanning across spreads of the graphic novel when single pages are presented as the images of the graphic novel. In one instance, the display module 610 initially presents the complete two-page spread of the graphic novel containing the spanned panel on the reader device 180. The display module 610 subsequently displays each of the two pages of the spread depending on the presentation order of the objects of interest contained in each page. For example, when two speech bubbles are positioned on left and right pages of a spread, the display module 610 may display the page containing the speech bubble with the first presentation order and present the expanded version of the speech bubble responsive to a signal. The display module 610 may then display the remaining page containing the speech bubble with the next order and present the expanded version of the speech bubble responsive to another signal.

In one embodiment, the display module 610 displays expanded versions of objects of interest in an image by overlaying the expanded objects on the image proximate to the original locations of the objects of interest. In one instance, the display module 610 overlays the expanded object of interest on the image such that the reference point of the original object of interest is aligned with a corresponding distinct point of the expanded object of interest. For example, an expanded speech bubble object may be overlaid on the original speech bubble object of the image such that the anchor point of the original and expanded speech bubbles are aligned. If the display module 610 determines that the expanded object of interest would expand beyond the edge of the graphic novel image, the display module 610 may shift the location of the expanded object of interest such that the user of the reader device 180 has a complete view of the object. In another instance, the display module 610 separately generates expanded versions of distinctive features of the objects of interest such that the location of each expanded feature can be adjusted individually. For example, the display module 610 may separately generate the balloon-shaped portion and the tail portion of a speech bubble object, and position the expanded version of each feature individually.

In one embodiment, when an expanded object of interest overlaid on the original object of interest does not completely cover the original object on the image, the display module 610 overlays a translucent mask to obscure the exposed portions of the original object of interest. For example, an expanded speech bubble object may be overlaid on the original speech bubble object with text from the original speech bubble object being largely exposed to the user of the reader device 180. It may be difficult for the user of the reader device 180 to comprehend the text of the speech bubble, as the user is presented with two overlapping text portions side-by-side on the image. In such a case, the display module 610 may obscure the exposed text portion of the original speech bubble object with a translucent mask such that the user of the reader device 180 may comprehend the text in a more convenient manner.

In one embodiment, the display module 610 analyzes sizes of the objects of interest on the screen of the reader device 180, and determines whether presentation of the expanded versions of the objects is necessary, or whether the user of the reader device 180 can conveniently navigate through the graphic novel without being presented with the expanded objects. For example, a user of the reader device 180 may select a threshold font size that indicates the minimum font size of speech bubble text the user is comfortable viewing without being presented with an expanded version of the speech bubble object. Responsive to this input, the display module 610 may determine the font size of text in a speech bubble object, and selectively present an expanded version of the speech bubble object if the determined font size is above the minimum font size specified by the user of the reader device 180.

In one embodiment, when an expanded version of an object of interest has been presented on the reader device 180, the display module 610 also displays annotations around the object of interest that include commentary on the object of interest (e.g., name and history of a character in the graphic novel). This allows the user of the reader device 180 to retrieve information on a character as the user is reading the graphic novel without having to search for information on the character in a separate application.

The display module 610 may generate the expanded objects in various ways. In one embodiment in which a down-sampled image is presented on the reader device 180, the display module 610 generates the expanded version of an object of interest by locating the corresponding object of interest in the original higher-resolution image and using the information contained in the higher-resolution version of the object. For example, an expanded version of a speech bubble object in a down-sampled pixelated image may be generated by locating the speech bubble object in the original digital image with higher number of pixels and simply displaying the higher number of pixels on the screen of the reader device 180 to generate the expanded object. In other embodiments, the expanded object of interest may be generated by up scaling the pixels of the object, or any other method of generating a magnified version of the object for display.

The feedback module 620 provides a set of editing tools in conjunction with the user interface that the user of the reader device 180 can use to provide feedback regarding the presentation of the digital graphic novel. The feedback data may include indications of incorrect presentation metadata, and indications of potential objects of interest not yet identified by the graphic novel analysis system 120.

In various embodiments, the feedback module 620 provides a virtual button on a screen of the display device that the user can select to report incorrect presentation metadata through the editing tools provided by the module 620. For example, if the display module 610 presents the expanded objects of interest in an incorrect order, the user can press the button and complete a short feedback form to describe the correct order. As another example, the user of the reader device 180 may indicate that an object of interest has not been detected by pressing long and/or hard on a portion of the image containing the undetected object, or drawing a line around the undetected object. The feedback module 620 collects these indications of incorrect presentation metadata and provides it to the validation module 430 of the graphic novel analysis system 120 such that the navigation experience of the graphic novel can be further improved.

In one embodiment, the feedback module 620 is capable of modifying the presentation metadata in the local data store 630 for the corresponding graphic novel such that the incorrect presentation of the graphic novel may be corrected on-the-fly. For example, the feedback module 620 may identify an approximate location of the undetected object of interest, re-order the objects within the image, and modify the local presentation metadata with this information such that the display module 610 can present the expanded version of the undetected object based on the identified approximate location.

In various embodiments, the feedback module 620 also tracks portions of digital images that users of reader devices 180 have zoomed in to. Portions of images in which many users have zoomed in indicate potential objects of interest that the graphic novel analysis system 120 has not yet identified in the graphic novel. These may include new types of objects, such as new characters and the like, or objects of interest that the graphic novel analysis system 120 missed to identify. The feedback module 620 also provides this information to the validation module 430 such that the navigation experience can be further improved.

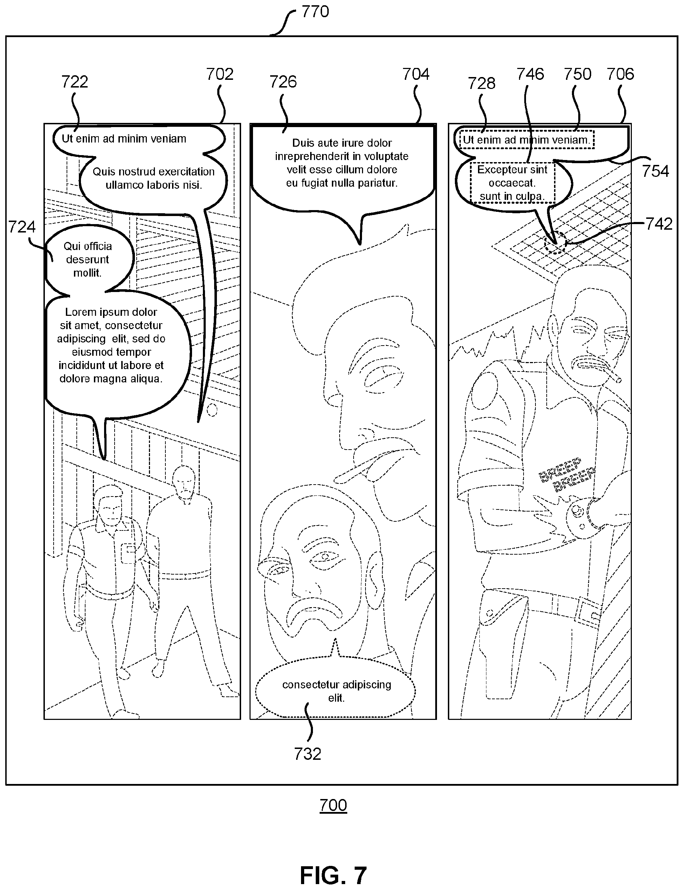

FIG. 7 shows an example image 700 of a graphic novel with identified locations of speech bubbles 722, 724, 726, 728, according to one embodiment.

The example image 700 shows a single page 770 of a graphic novel having three panels 702, 704, 706 and five speech bubble objects 722, 724, 726, 728, 732. The scenes in each of the panels 702, 704, 706 show two characters of the graphic novel conversing with each other. In example image 700, the graphic novel analysis module 120 has identified the locations of speech bubble objects 722, 724, 726, 728 (as shown in solid thick lines around the speech bubbles), but has failed to identify speech bubble object 732 (as shown in dotted lines).

In speech bubble object 728, the locations of text regions 746, 750 are detected by the object identification module 414 in the graphic novel analysis system 120 by applying the numerical map of the image 700 to machine-learned models built by the training module 414. The location of speech bubble object 728 is determined based on the identified text regions 746, 750 by identifying distinctions around the text regions 746, 750 indicating the outer boundary 754 of the speech bubble object 728. Distinctive features of the speech bubble object 728, such as anchor point 742, are also identified by the object identification module 414 by analyzing the shape of the speech bubble object 728.

In example image 700, the intended reading order of the panels are in the order of (724, 726, 728), assuming the graphic novel is read top-to-bottom, left-to-right. The anchor points of detected speech bubble objects 722, 724, 726, 728 are used as reference points by the ordering module 422 to determine the presentation orders for the speech bubbles. Specifically, speech bubble objects 722, 724 are determined to be associated with panel 702, speech bubble object 726 associated with panel 704, and speech bubble object 728 associated with panel 706. Speech bubble object 722 is assigned the first presentation order among the four detected speech bubble objects since it is in the left-most panel 702, and its anchor point is positioned above speech bubble object 724. Similarly, speech bubble object 724 is assigned the second order, speech bubble object 726 is assigned the third order, and speech bubble object 728 is assigned the fourth order as it is in the last panel 706. Thus, the presentation metadata of the corresponding graphic novel contains the locations and presentation order of the speech bubble objects (722, 724, 726, 728) for example image 700.

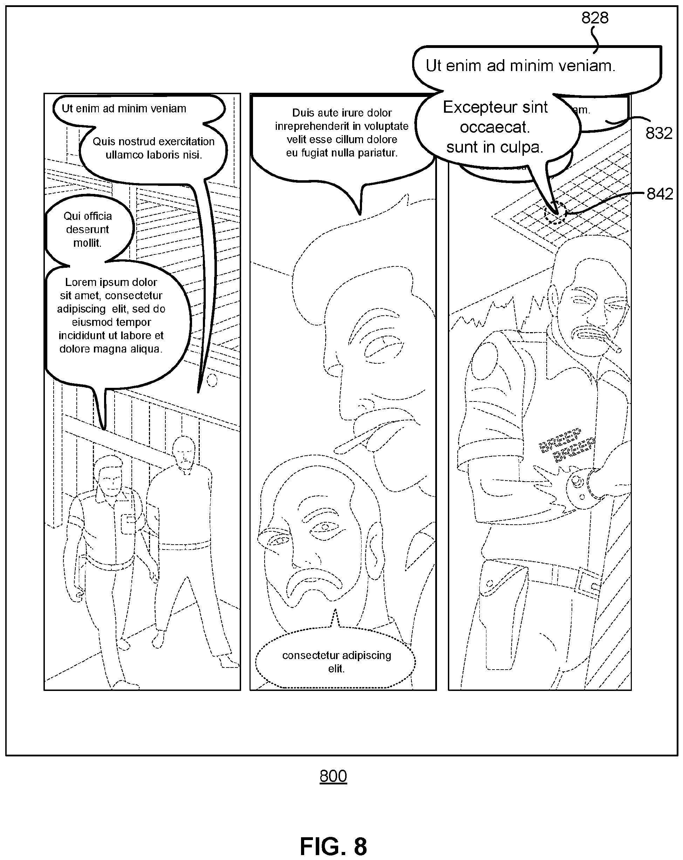

FIG. 8 shows an example image 800 based on the example image of FIG. 7 with an expanded speech bubble 828, according to one embodiment.

As shown in example image 800, expanded speech bubble object 828 is presented to a user of a reader device according to the presentation order of speech bubble object 728. In this particular example, expanded speech bubble object 828 is overlaid on original speech bubble object 728 by aligning the anchor point 842 of expanded speech bubble 828 with that of original speech bubble 728. As discussed previously in reference to the display module 610, the exposed portion 832 remaining from original speech bubble object 728 may be obscured by the display module 610 such that the user of the reader device may comprehend the text of expanded speech bubble 828 more easily.

When an expanded version of speech bubble 732 is not presented to the user of the reader device 180 before the presentation of speech bubble object 828, the user may press long on the portion containing speech bubble 732, or zoom into the portion such that the feedback module 620 can provide the feedback to the validation module 430.

### EXEMPLARY METHODS

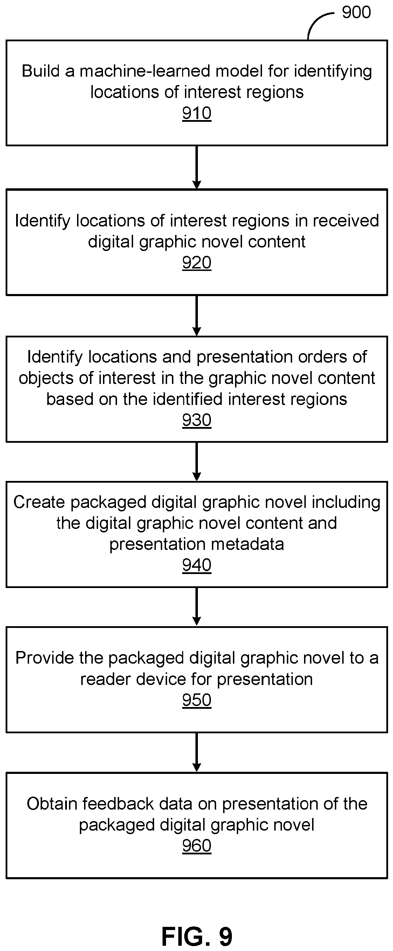

FIG. 9 is a flowchart illustrating a method 900 of providing automated or semi-automated navigation of objects of interest in digital graphic novel content, according to one embodiment. FIG. 9 attributes the steps of the method 900 to various components of the networked computing environment 100. However, some or all of the steps may be performed by other entities, including the graphic novel analysis system 120 and/or the graphic novel distribution system 130. In addition, some embodiments may perform the steps in parallel, perform the steps in different orders, or perform different steps.

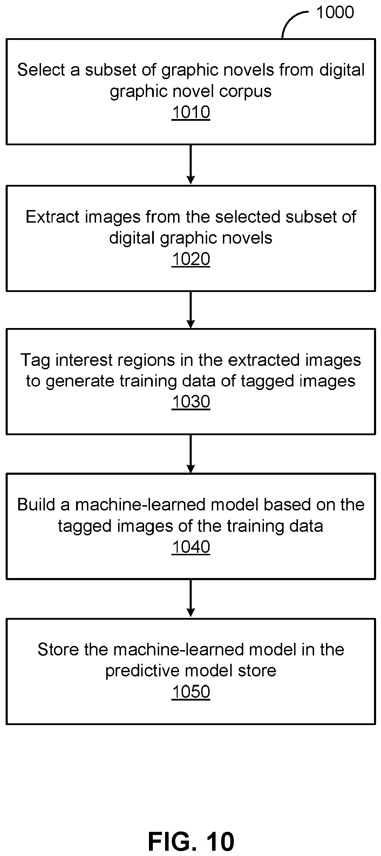

In the embodiment shown in FIG. 9, the system builds 910 a machine-learned model for identifying locations of interest regions in digital graphic novel content. As described previously, the machine-learned model is initially built by tagging interest regions in graphic novel content or other sources of images that contain areas representative of the objects of interest. One embodiment of a method 1000 for building the machine-learned model is described in detail below, with reference to FIG. 10. The machine-learned model is then applied 920 to digital graphic novel content to identify the locations of interest regions. Based on the identified interest regions, the system identifies 930 locations and presentation orders of objects of interest in the digital graphic novel content. The system creates 940 a packaged digital graphic novel that includes the graphic novel content and presentation metadata. The presentation metadata includes the identified locations and presentation orders of the objects of interest. The packaged digital graphic novel is provided 950 to reader devices for presentation in accordance with the presentation metadata. The system also obtains 960 feedback data on the presentation of the digital graphic novel content on the reader devices, and uses the feedback data to improve presentation metadata of the digital graphic novel content. In one embodiment, the objects of interest are speech bubble objects in the digital graphic novel content, and the interest regions are rectangular text regions surrounding the text of the speech bubble objects.

FIG. 10 is a flowchart illustrating a method 1000 of building a machine-learned model for use in the method of FIG. 9, according to one embodiment. FIG. 10 attributes the steps of the method 1000 to various components of the networked computing environment 100. However, some or all of the steps may be performed by other entities, including the graphic novel analysis system 120 and/or the graphic novel distribution system 130. In addition, some embodiments may perform the steps in parallel, perform the steps in different orders, or perform different steps.

In the embodiment shown in FIG. 10, the system identifies 1010 a subset of digital graphic novels from the corpus. The system extracts 1020 the images (e.g., corresponding to individual pages) from the selected subset of digital graphic novel content or collects any other sources of images containing interest regions. The system tags 1030 interest regions in the images to generate training data of tagged images. As discussed previously, the interest regions may be rectangular text regions surrounding the text of speech bubble objects in the digital graphic novel content. Based on the tagged images of the training data, the system creates 1040 a machine-learned model capable of receiving digital graphic novel content and generating locations of interest regions in the digital graphic novel content. The system stores 1050 the machine-learned model in the predictive model store.

### ADDITIONAL CONSIDERATIONS

Some portions of above description describe the embodiments in terms of algorithmic processes or operations. These algorithmic descriptions and representations are commonly used by those skilled in the data processing arts to convey the substance of their work effectively to others skilled in the art. These operations, while described functionally, computationally, or logically, are understood to be implemented by computer programs comprising instructions for execution by a processor or equivalent electrical circuits, microcode, or the like. Furthermore, it has also proven convenient at times, to refer to these arrangements of functional operations as modules, without loss of generality. The described operations and their associated modules may be embodied in software, firmware, hardware, or any combinations thereof.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the disclosure. This description should be read to include one or at least one and the singular also includes the plural unless it is obvious that it is meant otherwise.

Upon reading this disclosure, those of skill in the art will appreciate still additional alternative structural and functional designs for a system and process for providing navigation of objects of interest in digital graphic novel content. Thus, while particular embodiments and applications have been illustrated and described, it is to be understood that the described subject matter is not limited to the precise construction and components disclosed herein and that various modifications, changes and variations which will be apparent to those skilled in the art may be made in the arrangement, operation and details of the method and apparatus disclosed herein. The scope of the invention is to be limited only by the following claims.

## Claims

1. A computer-implemented method of providing digital graphic novel content to a reading device, the method comprising:
receiving digital graphic novel content comprising a serie, of panels conveying the narrative of the graphic novel;
identifying (920) locations of a plurality of interest regions of the digital graphic novel content by applying a model to the digital graphic novel content;
identifying (930) locations of a plurality of objects of interest in the digital graphic novel content based on the identified locations of the plurality of interest regions, wherein the plurality of objects comprise speech bubble objects in the digital graphic novel content that contain text associated with characters in the digital graphic novel content;
for each object of interest:
i) identifying coordinates of a distinctive feature of the object of interest,
ii) setting a reference point associated with the object of interest using the coordinates of the distinctive feature,
iii) determining a panel containing the object of interest based on a spatial relationship between the reference point and location of the panel,
iv) determining the presentation order of the object of interest within the panel based on spatial relationships between the reference point and reference points of other objects of interest contained within the panel;
creating (940) presentation metadata for the digital graphic novel content indicating the identified locations and presentation orders of the plurality of objects of interest; and
providing (950) the digital graphic novel content and the presentation metadata to the reading device for presentation of expanded versions of the plurality of objects of interest in accordance with the presentation metadata.

2. The computer-implemented method of claim 1, wherein the model is a machine-learned model, and further comprising building (900) the machine-learned model, the building comprising:
selecting a set of images;
tagging interest regions in the set of images to generate training data of tagged images; and
building the machine-learned model based on the tagged images of the training data, the machine-learned model being capable of receiving the digital graphic novel content and generating the locations of the plurality of interest regions in the digital graphic novel content.

3. The computer-implemented method of claim 1, wherein the plurality of interest regions comprise text regions of the speech bubble objects in the digital graphic novel content that encompass the text of the speech bubble objects.

4. The computer-implemented method of claim 1, wherein the object of interest is a speech bubble object in the digital graphic novel content and the distinctive feature is an anchor point of the speech bubble object.

5. The computer-implemented method of claim 2, further comprising:
obtaining feedback data on presentation of the digital graphic novel content; and
updating the machine-learned model based on the obtained feedback data to improve presentation metadata associated with the digital graphic novel content.

6. The computer-implemented method of claim 5, wherein the feedback data includes portions of the digital graphic novel content that have been zoomed-in on the reading device.

7. A non-transitory computer-readable storage medium storing executable computer program instructions for providing digital graphic novel content to a reading device, the computer program instructions causing, when executed, at least one processor to perform any of the methods of claims 1-6.

8. A server for providing digital graphic novel content to a reading device, comprising computing means, that when executed, perform any of the methods of claims 1-6.

## Patentansprüche

1. Computerimplementiertes Verfahren zur Bereitstellung digitaler Graphic-Novel-Inhalte an eine Lesevorrichtung, das Verfahren umfassend:
Empfangen digitaler Graphic-Novel-Inhalte, die eine Reihe von Panels umfassen, die die Geschichte der Graphic Novel vermitteln;
Identifizieren (920) von Positionen einer Vielzahl von interessierenden Bereichen der digitalen Graphic-Novel-Inhalte durch Anwenden eines Modells auf die digitalen Graphic-Novel-Inhalte;
Identifizieren (930) von Positionen einer Vielzahl von interessierenden Objekten in den digitalen Graphic-Novel-Inhalten basierend auf den identifizierten Positionen der Vielzahl von interessierenden Bereichen, wobei die Vielzahl von Objekten Sprechblasenobjekte in den digitalen Graphic-Novel-Inhalten umfassen, die Text enthalten, der Figuren in den digitalen Graphic-Novel-Inhalten zugeordnet ist;
für jedes interessierende Objekt:
i) Identifizieren von Koordinaten eines besonderen Merkmals des interessierenden Objekts,
ii) Setzen eines Referenzpunkts, der dem interessierenden Objekt zugeordnet ist, unter Verwendung der Koordinaten des besonderen Merkmals,
iii) Bestimmen eines Panels, das das interessierende Objekt enthält, basierend auf einer räumlichen Beziehung zwischen dem Referenzpunkt und der Position des Panels,
iv)Bestimmen der Darstellungsreihenfolge des interessierenden Objekts innerhalb des Panels basierend auf räumlichen Beziehungen zwischen dem Referenzpunkt und Referenzpunkten anderer interessierender Objekte, die in dem Panel enthalten sind;
Erstellen (940) von Darstellungsmetadaten für die digitalen Graphic-Novel-Inhalte, die die identifizierten Positionen und Darstellungsreihenfolgen für die Vielzahl von interessierenden Objekten angeben; und
Bereitstellen (950) der digitalen Graphic-Novel-Inhalte und der Darstellungsmetadaten an die Lesevorrichtung zur Darstellung von erweiterten Versionen der Vielzahl von interessierenden Objekten in Übereinstimmung mit den Darstellungsmetadaten.

2. Computerimplementiertes Verfahren nach Anspruch 1, wobei das Modell ein maschinell erlerntes Modell ist, und ferner umfassend ein Aufbauen (900) des maschinell erlernten Modells, wobei das Aufbauen Folgendes umfasst:
Auswählen eines Satzes von Bildern;
Kennzeichnen von interessierenden Bereichen in dem Satz von Bildern, um Trainingsdaten aus gekennzeichneten Bildern zu erzeugen; und
Aufbauen des maschinell erlernten Modells basierend auf den gekennzeichneten Bildern der Trainingsdaten, wobei das maschinell erlernte Modell in der Lage ist, die digitalen Graphic-Novel-Inhalte zu empfangen und die Positionen der Vielzahl von interessierenden Bereichen in den digitalen Graphic-Novel-Inhalten zu erzeugen.

3. Computerimplementiertes Verfahren nach Anspruch 1, wobei die Vielzahl von interessierenden Bereichen Textbereiche der Sprechblasenobjekte in den digitalen Graphic-Novel-Inhalten, die den Text der Sprechblasenobjekte umgeben, umfassen.

4. Computerimplementiertes Verfahren nach Anspruch 1, wobei das interessierende Objekt ein Sprachblasenobjekt in den digitalen Graphic-Novel-Inhalten ist und das besondere Merkmal ein Ankerpunkt des Sprachblasenobjekts ist.

5. Computerimplementiertes Verfahren nach Anspruch 2, ferner umfassend:
Erhalten von Feedbackdaten zur Darstellung der digitalen Graphic-Novel-Inhalte;
und
Aktualisieren des maschinell erlernten Modells basierend auf den erhaltenen Feedbackdaten, um Darstellungsmetadaten, die den digitalen Graphic-Novel-Inhalten zugeordnet sind, zu verbessern.

6. Computerimplementiertes Verfahren nach Anspruch 5, wobei die Feedbackdaten Abschnitte der digitalen Graphic-Novel-Inhalte beinhalten, die auf der Lesevorrichtung herangezoomt wurden.

7. Nichtflüchtiges computerlesbares Speichermedium, auf dem ausführbare Computerprogrammanweisungen zum Bereitstellen digitaler Graphic-Novel-Inhalte an eine Lesevorrichtung gespeichert sind, wobei die Computerprogrammanweisungen, wenn sie ausgeführt werden, zumindest einen Prozessor veranlassen, eines der Verfahren nach Anspruch 1-6 durchzuführen.

8. Server zum Bereitstellen von digitalen Graphic-Novel-Inhalten an eine Lesevorrichtung, umfassend Rechenmittel, die, wenn sie ausgeführt werden, eines der Verfahren nach Anspruch 1-6 durchführen.

## Revendications

1. Procédé mis en œuvre par ordinateur pour fournir du contenu de roman graphique numérique à un dispositif de lecture, le procédé comprenant :
la réception d'un contenu de roman graphique numérique comprenant une série de panneaux transmettant le récit du roman graphique ;
l'identification (920) d'emplacements d'une pluralité de régions d'intérêt du contenu de roman graphique numérique en appliquant un modèle au contenu de roman graphique numérique ;
l'identification (930) d'emplacements d'une pluralité d'objets d'intérêt dans le contenu de roman graphique numérique sur la base des emplacements identifiés de pluralité de régions d'intérêt, dans lequel la pluralité d'objets comprend des objets de bulle de texte dans le contenu de roman graphique numérique qui contiennent du texte associé à des personnages dans le contenu de roman graphique numérique ;
pour chaque objet d'intérêt :
i) l'identification de coordonnées d'une caractéristique distinctive de l'objet d'intérêt,
ii) la définition d'un point de référence associé à l'objet d'intérêt à l'aide des coordonnées de la caractéristique distinctive,
iii) la détermination d'un panneau contenant l'objet d'intérêt sur la base d'une relation spatiale entre le point de référence et l'emplacement du panneau,
iv) la détermination de l'ordre de présentation de l'objet d'intérêt dans le panneau sur la base de relations spatiales entre le point de référence et les points de référence d'autres objets d'intérêt contenus dans le panneau ;
la création (940) de métadonnées de présentation du contenu de roman graphique numérique indiquant les emplacements identifiés et les ordres de présentation de la pluralité d'objets d'intérêt ; et
la fourniture (950) du contenu de roman graphique numérique et des métadonnées de présentation au dispositif de lecture pour la présentation de versions agrandies de la pluralité d'objets d'intérêt selon les métadonnées de présentation.

2. Procédé mis en œuvre par ordinateur selon la revendication 1, dans lequel le modèle est un modèle d'apprentissage machine, et comprenant en outre la construction (900) du modèle d'apprentissage machine, la construction comprenant :
la sélection d'un ensemble d'images ;
l'étiquetage de régions d'intérêt dans l'ensemble d'images pour générer des données d'entraînement d'images étiquetées ; et
la construction du modèle d'apprentissage machine sur la base des images étiquetées des données d'entraînement, le modèle d'apprentissage machine étant capable de recevoir le contenu de roman graphique numérique et la génération des emplacements de la pluralité de régions d'intérêt dans le contenu de roman graphique numérique.

3. Procédé mis en œuvre par ordinateur selon la revendication 1, dans lequel la pluralité de régions d'intérêt comprend des régions de texte des objets de bulle de texte dans le contenu de roman graphique numérique qui englobe le texte des objets de bulle de texte.

4. Procédé mis en œuvre par ordinateur selon la revendication 1, dans lequel l'objet d'intérêt est un objet de bulle de texte dans le contenu de roman graphique numérique et la caractéristique distinctive est un point d'ancrage de l'objet de bulle de texte.

5. Procédé mis en œuvre par ordinateur selon la revendication 2, comprenant en outre :
l'obtention de données de rétroaction sur la présentation du contenu de roman graphique numérique ;
et
la mise à jour du modèle d'apprentissage machine sur la base des données de rétroaction obtenues pour améliorer des métadonnées de présentation associées au contenu de roman graphique numérique.

6. Procédé mis en œuvre par ordinateur selon la revendication 5, dans lequel les données de rétroaction incluent des portions du contenu de roman graphique numérique qui ont été agrandies sur le dispositif de lecture.

7. Support de stockage lisible par ordinateur non transitoire stockant des instructions de programme informatique exécutable pour fournir un contenu de roman graphique numérique à un dispositif de lecture, les instructions de programme informatique amenant, lorsqu'elles sont exécutées, au moins un processeur à réaliser l'un quelconque des procédés selon les revendications 1 à 6.

8. Serveur pour fournir un contenu de roman graphique numérique à un dispositif de lecture, comprenant des moyens informatiques, qui, lorsqu'ils sont exécutés, réalisent l'un quelconque des procédés selon les revendications 1 à 6.
